(19) Europäisches Patentamt / European Patent Office / Office européen des brevets

(11) **EP 2 799 251 B1**

## (12) EUROPEAN PATENT SPECIFICATION

(45) Date of publication and mention
of the grant of the patent:
**04.04.2018 Bulletin 2018/14**

(21) Application number: **12862485.5**

(22) Date of filing: **28.12.2012**

(51) Int Cl.:
*B29D 30/06* (2006.01)    *B29C 33/42* (2006.01)
*B60C 11/00* (2006.01)    *B29C 33/02* (2006.01)
*B29L 30/00* (2006.01)

(86) International application number:
**PCT/JP2012/084303**

(87) International publication number:
**WO 2013/100196 (04.07.2013 Gazette 2013/27)**

(54) **TIRE AND TIRE MOLDING CAST**

REIFEN UND REIFENGUSSFORMEN

PNEUMATIQUE ET COULÉE DE MOULAGE DE PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.12.2011 JP 2011289749**

(43) Date of publication of application:
**05.11.2014 Bulletin 2014/45**

(73) Proprietor: **Bridgestone Corporation
Tokyo 104-8340 (JP)**

(72) Inventor: **KAWAKITA, Akihiro
Kodaira-shi
Tokyo 187-8531 (JP)**

(74) Representative: **Oxley, Robin John George
Marks & Clerk LLP
90 Long Acre
London WC2E 9RA (GB)**

(56) References cited:
EP-A2- 2 028 023    WO-A1-2011/118856
DE-A1-102004 010 060    JP-A- H0 274 404
JP-A- H0 390 403    JP-A- H02 147 411
JP-A- H07 257 111    JP-A- H07 257 111
JP-A- S63 188 504    JP-A- 2007 015 621
JP-A- 2007 320 248    JP-A- 2009 067 378
US-A1- 2010 218 868    US-A1- 2010 282 387

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to tires and tire forming molds, and more particularly, to tires that are excellent in on-ice performance and on-snow performance, and tire forming molds used for manufacturing the same.

BACKGROUND ART

Conventionally, various contrivances have been made for improving the on-ice performance and on-snow performance of winter tires.

For example, a technology which increases edge components present in a contact patch and simultaneously improves the snow-gripping effect and the travelling performance on icy and snowy road surfaces (iced road surfaces and snowed road surfaces) of tires, by providing a plurality of sipes on each block formed on a tread portion, is proposed in JP 2002-192914 A (PTL 1).

In addition, for example, JP H11-301217 A (PTL 2) proposes a technology which uses foamed rubber as a cap rubber on a tire having a tread rubber with a so-called cap-and-base structure comprising a cap rubber and a base rubber, thereby significantly improving the drainage performance and the on-ice performance and on-snow performance of the tire.

Also, for example, JP 2009-67378 A (PTL 3) proposes, as is shown in FIG. 1(a), for the surface properties of the tread portion 1 of the tire, a technology which increases the roughness of the surface, increases the frictional force between the tire surface and a road surface, and improves the on-ice performance and on-snow performance of the tire, by providing protrusions 2 with a sharp-ended shape on the surface of the tread portion. WO2011/118856 and DE102004010060 disclose tires with protrusions

CITATION LIST

Patent Literature

     PTL 1: JP 2002-192914 A

     PTL 2: JP H11-301217 A

     PTL 3: JP 2009-67378 A

SUMMARY OF INVENTION

(Technical Problem)

However, in the technology disclosed in PTL 1 which provides sipes on each block, there is a problem that if the number of sipes is increased too much, the block rigidity will be decreased and collapsing of a block may easily happen, which causes a reduction in the ground contact area and, rather, degrades the on-ice performance and on-snow performance.

In addition, in the technology disclosed in PTL 2 using foamed rubber for the cap rubber, there are cases where a reduction in the rigidity of the entire blocks is caused by usage of foamed rubber, so that the wear resistance of the tire is not always sufficient.

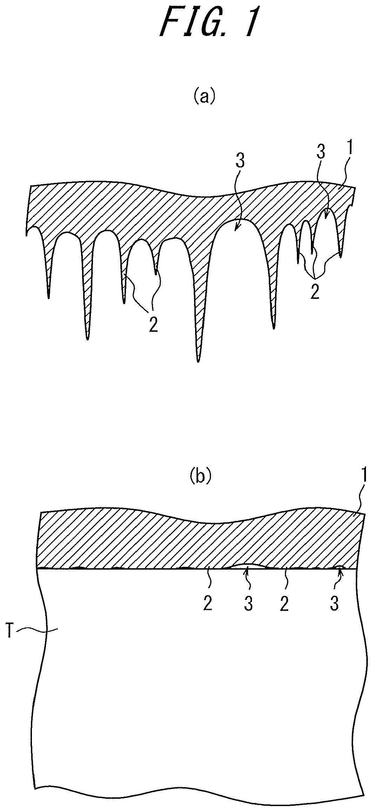

Further, for example, in the technology disclosed in PTL 3 which provides protrusions with a sharp-ended shape on the surface of the tread portion, due to the fact that the rigidity of the protrusion is low, there are cases where the protrusions collapse and the desirable performance cannot be obtained, particularly when a large load is placed on the tire, such as when the load on the front wheel is increased due to nose diving of the vehicle, etc. Namely, in the technology providing protrusions with a sharp-ended shape on the surface of the tread portion, there are cases that protrusions 2 collapse due to the contacting with road surface T, the volume of gaps 3 for water removing is reduced, the drainage is reduced, and consequently the desirable on-ice performance and on-snow performance may not be obtained, as is shown in FIG. 1(b). Therefore, there is still room for further improvement of the on-ice performance and on-snow performance in the technology disclosed in PTL 3. In addition, as the result of repeated study by the inventors on tires applying the technologies disclosed in PTL 1 to 3, a problem is also found that the on-ice performance and on-snow performance cannot be sufficiently obtained on those conventional tires, particularly new tires, though the reason is not clear. Therefore, there is still room for further improvement of the on-ice performance and on-snow performance of, in particular, new tires, in the technologies disclosed in PTL 1 to 3.

An object of the present invention is to solve the aforementioned problems, and to provide a tire with improved on-ice performance and on-snow performance and a tire forming mold used for manufacturing (forming) the same.

(Solution to Problem)

The inventors have intensively studied to solve the problems aforementioned.
As a result, the present inventor has completed the present invention by finding that by forming a predetermined microstructure on the tread surface of the tread portion, it is possible to suppress the reduction of the block rigidity and the drainage performance of a tire, thereby to obtain further improved on-ice performance and on-snow performance of the tire, and to allow the tire to exhibit sufficient on-ice performance and on-snow performance even when the tire is brand new.

The present invention is made based on the findings above, and the primary features thereof are summarized as follows.
The tire of the present invention is characterized by the features of independent claim 1. At least a part of the tread surface of the tread portion has a surface roughness at which the kurtosis of the assessed profile Rku is 2 or less. In this way, by having at least a part of the tread surface of the tread portion (the surface in contact with the road surface when travelling) having a surface roughness at which the kurtosis of the assessed profile Rku is 2 or less, it is possible to suppress the degradation of the block rigidity, and simultaneously improve the on-ice performance and on-snow performance of the tire, by increasing the frictional force between the tire surface and the road surface. Here, "Rku" refers to the kurtosis of the assessed profile (JIS B 0601 (2001)) of the tread surface of the tread portion.

In addition, the tire forming mold tire of the present invention is a tire forming mold, and is characterized by the features of independent claim 5. It has a tread-surface molding surface for molding the tread surface of the tread portion of the tire, at which at least a part of the tread-surface molding surface has a surface roughness at which the kurtosis of the assessed profile Rku is 2 or less.
This is because that in this way, it is possible to form the aforementioned tire excellent in on-ice performance and on-snow performance, in which at least a part of the tread surface of the tread portion has a surface roughness at which the kurtosis of the assessed profile Rku is 2 or less.

(Advantageous Effect of Invention)

According to the present invention, it is possible to provide a tire with improved on-ice performance and on-snow performance and also a tire forming mold that can be used for forming the same.

BRIEF DESCRIPTION OF DRAWINGS

The present invention will be further described below with reference to the accompanying drawings, wherein:

FIG. 1(a) is a schematic sectional view schematically showing the tread surface of the tread portion of a conventional tire. FIG. 1 (b) is a schematic sectional view schematically showing the state where the tread surface of the tread portion of the tire is in contact with the road surface in the case where a load is placed upon the tire.
FIG. 2 is a sectional view of the tire according to an embodiment of the present invention taken along the tire width direction.
FIG. 3 schematically shows an enlarged view of the shape of a part of the tread surface of the tread portion of the tire shown in FIG. 2, where (a) is a plan view and (b) is a sectional view taken along the tire width direction.

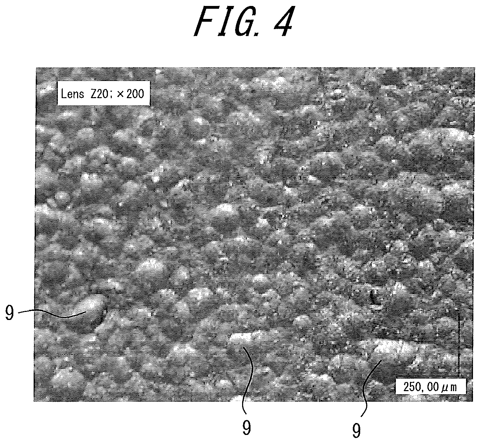

FIG. 4 shows an SEM image (Scanning Electron Microscope image) of a tread surface of a tread portion of a tire not according to the present invention.
FIG. 5 is a schematic perspective view schematically showing a part of the tire forming mold according to an embodiment of the present invention.
FIG. 6 schematically shows an enlarged view of the shape of a part of the tread-surface molding surface of the tire forming mold shown in FIG. 5, where (a) is a plan view and (b) is a sectional view taken along the width direction.
FIGS.7 (a) to (c) are other examples of the shape of a part of a tread surface of a tread portion of a tire not according to the present invention.

DESCRIPTION OF EMBODIMENTS

The tire and the tire forming mold of the present invention is explained hereinafter. The tire of the present invention is characterized in that a predetermined microstructure is formed on at least a part of the tread surface (the surface that contacts a road surface) of the tread portion, and the tread portion has predetermined surface properties (tread surface properties). Additionally, the tire forming mold of the present invention is used for manufacturing the tire of the present invention, characterized in that the tread-surface molding surface has predetermined surface properties by forming a predetermined microstructure on the inner surface of the mold, specifically at least a part of the tread-surface molding surface for molding the tread surface of the tire.

<Tire>

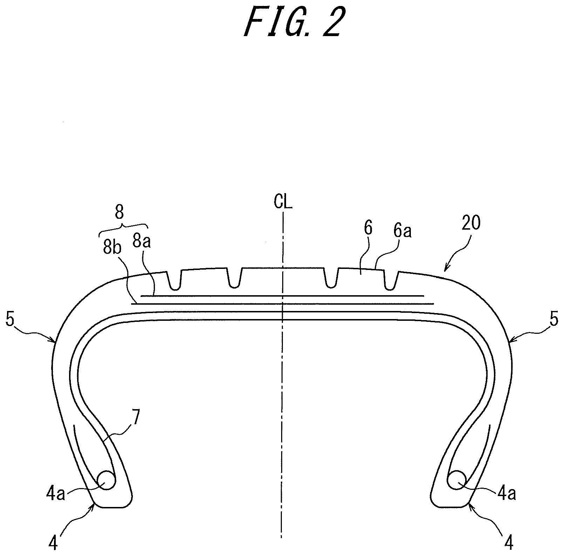

FIG. 2 is a sectional view of the tire according to an embodiment of the present invention taken along the tire width direction.

As is shown in FIG. 2, a tire 20 according to the embodiment of the present invention has a pair of bead portions 4, a pair of sidewall portions 5, each extending outwardly in the tire radial direction from each bead portion 4, and a tread portion 6 extending between the sidewall portions 5.

In addition, the tire 20 of the embodiment has a carcass 7 toroidally extending between a pair of bead cores 4a which are embedded in the pair of bead portions 4, and a belt 8 including belt layers 8a and 8b which are disposed on the outside of the carcass 7 in the tire radial direction. Further, a tread rubber made from non-foamed rubber is disposed on the outside of belt 8 in the tire radial direction.

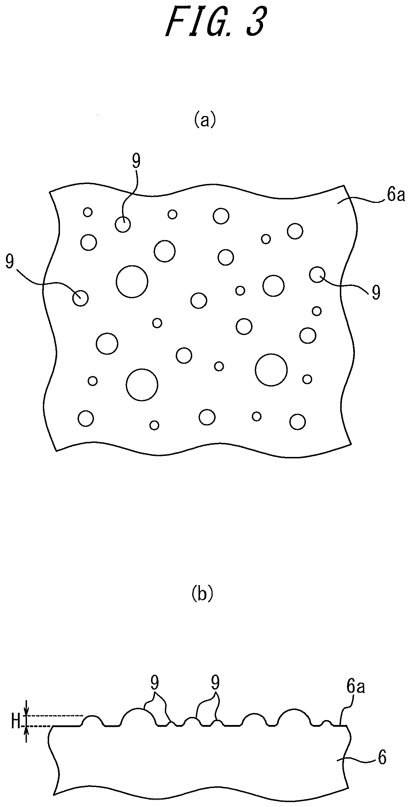

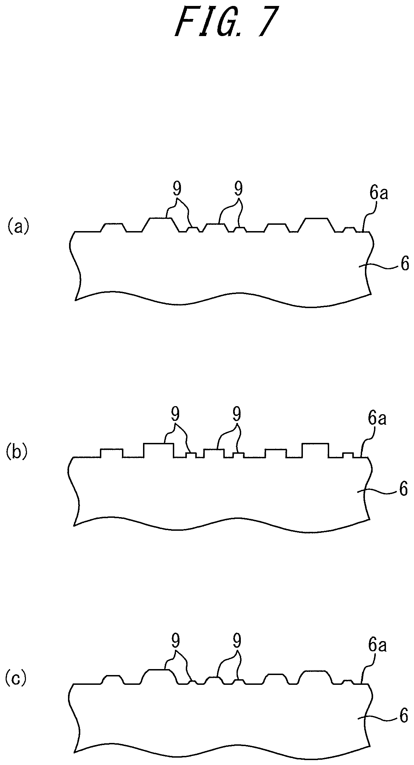

Here, micro protrusions with a predetermined shape are formed on at least a part of the tread surface of the tread portion (in this embodiment, the entire tread surface) of the tire 20. Specifically, according to an enlarged plan view of a surface 6a of the tread portion 6 shown in FIG. 3(a), an enlarged view of the tread portion 6 on the surface 6a side along the tire width direction shown in FIG. 3(b), the tire according to this embodiment has a surface roughness at which the kurtosis of the assessed profile Rku is 2 or less on the entire tread surface 6a of the tread portion. Further, FIG. 3 shows that the protrusions 9 are hemispherical protrusions in the tire of the present invention. Protrusions not part of the invention may be of various shapes, such as trapezoidal cross section shapes as shown in FIG. 7(a), including truncated conical shape and truncated pyramidal shape, rectangular cross section shapes as shown in FIG. 7(b), including cylindrical shape and prismatic shape, and truncated hemispherical shapes as shown in FIG. 7(c).

Additionally, in the tire 20, the tread surface of the tread portion has surface properties with a surface roughness at which the kurtosis of the assessed profile Rku is 2 or less, and consequently it is possible to suppress the degradation of the block rigidity and the drainage performance, and simultaneously improve the on-ice performance and on-snow performance of the tire sufficiently.

Namely, in the tire 20, the tread surface of the tread portion has surface properties with a surface roughness at which the kurtosis of the assessed profile Rku is 2 or less, and consequently it is possible to remove a water film on the road surface (to allow the tire to exhibit a better drainage performance) by utilizing the gaps among protrusions 9 when the tire becomes in contact with the road surface. In addition, it is possible to improve the on-ice performance and on-snow performance of the tire by increasing the frictional force between the tread surface of the tread portion and the road surface. Further, in the tire 20, the suppression of the degradation of the drainage performance and the improvement of the on-ice performance and on-snow performance is accomplished by forming micro protrusions 9 having a predetermined shape, therefore there is no need to form an excessive number of sipes, or utilize foamed rubber, etc. In addition, the tire 20 may exhibit sufficient on-ice performance and on-snow performance even when the tire is new (in unused state), although the reason is not clear.

Therefore, with the tire 20, it is possible to further improve the on-ice performance and on-snow performance of the tire even when it is new, by suppressing the degradation of the block rigidity and the drainage performance.

Here, for the tire 20, it is more preferable that the part with protrusions formed thereon has surface properties with a surface roughness at which the kurtosis of the assessed profile Rku is 1.5 or less, for the same reason.

In addition, for the tire 20, the protrusions 9 have a hemispherical shape. This is because that if the protrusions 9 have a hemispherical shape, the protrusions 9 are unlikely to collapse and the drainage performance may be ensured.

Further, for the tire 20, it is preferable that the height H of the protrusions 9 formed on the tread surface of the tread portion is 1 to $50\mu m$. This is because that if the height H is set to be $1\mu m$ or more, it is possible to improve the drainage performance by ensuring a sufficient volume of gaps among the protrusions 9. In addition, if the height H of the protrusions 9 is set to be $50\mu m$ or less, it is possible to sufficiently ensure the drainage performance by increasing the rigidity of the protrusions 9.

Here, the height of the protrusions 9 refers to the distance along the tire radial direction between a first imaginary plane perpendicular to a tire radial direction line extending across the distal ends of the protrusions 9 (the outer ends in the tire radial direction), and a second imaginary plane closest to the aforementioned first imaginary plane among the imaginary planes contacting the outer contour line of the protrusions 9 and perpendicular to the aforementioned tire radial direction line.

Note that the height of the protrusions 9 may be measured with an SEM or microscope.

In addition, it is preferable that the tire of the present invention has a surface roughness satisfying the condition that

$$Rsk<0$$

on at least a part of the tread surface of the tread portion.

In this way, it is possible to further suppress the degradation of block rigidity and drainage performance, and simultaneously improve the on-ice performance and on-snow performance of tires. Namely, the skewness of the assessed profile Rsk of the tread surface of the tread portion satisfies the condition:

$$Rsk<0$$

Therefore, it is possible to further suppress the degradation of the block rigidity and the drainage performance, and simultaneously further improve the on-ice performance and on-snow performance of the tire sufficiently. Namely, the aforementioned tire has surface properties that Rsk<0, and consequently, even in the case where a large load is placed on the tire, the protrusions are unlikely to collapse, and therefore it is possible to ensure the block rigidity and water-removing paths, because that the protrusions are of a shape of a high rigidity.

Further, it is more preferable that in the tire of the present invention, the part with protrusions 9 formed thereon has surface properties satisfying the following condition:

$$Rsk<-0.1$$

Here, "Rsk" refers to the skewness of the assessed profile (JIS B 0601 (2001)) of the tread surface of the tread portion. Further, the "Rsk" and "Rku" are the values measured in a unit length (1mm).

Here, the tire of the present invention has surface properties satisfying the following condition:

$$50\mu m \leq RSm \leq 250\mu m$$

In this way, by setting the RSm of at least a part of the tread surface of the tread portion to be 50 to 250$\mu$m, it is possible to further suppress the degradation of the block rigidity, increase the frictional force between the tire surface and the road surface, and simultaneously further improve the on-ice performance and on-snow performance of tires. In addition, it is possible to suppress the degradation of the drainage performance. It is also possible to further suppress the degradation of the block rigidity and the drainage performance, and simultaneously further improve the on-ice performance and on-snow performance of the tire sufficiently, because that the RSm of the tread surface of the tread portion is 50 to 250$\mu$m.

Namely, since the RSm of the tread surface of the tread portion is 50$\mu$m or more, it is possible to obtain a sufficiently large protrusion external diameter and a sufficiently large distance between the protrusions. Therefore, it is possible to achieve both the water-film removing on a road when the tread surface of the tread portion comes in contact with the road surface by utilizing the gaps among protrusions 9, and the improvement of the on-ice performance and on-snow performance by increasing the frictional force between the tread surface of the tread portion and the road surface.

Further, since the RSm of the tread surface of the tread portion is 250$\mu$m or less, it is possible to sufficiently increase the frictional force between the tread surface of the tread portion and the road surface by forming a sufficient number of protrusions in a high density on the tread surface of the tread portion.

Further, for the tire of the present invention, it is preferable that the RSm is 50 to 250$\mu$m in the range of 90% or more of the area of the tread surface of the tread portion. This is because that by setting the Rsm to be 50 to 250$\mu$m in the range of 90% or more of the area of the tread surface of the tread portion, it is possible to sufficiently increase the effect to be obtained by setting the surface properties in a predetermined range.

Here, in the tire 20, it is more preferable that the RSm of the tread surface of the tread portion is 60 to 150$\mu$m. This is because that by setting the RSm of the tread surface of the tread portion to be 60$\mu$m or more, it is possible to improve the drainage performance sufficiently, and simultaneously increase the frictional force between the tread surface of the tread portion and the road surface sufficiently. Additionally, by setting the RSm of the tread surface of the tread portion to be 150$\mu$m or more, it is possible to increase the frictional force between the tread surface of the tread portion and the road surface sufficiently.

Here, "RSm" refers to the mean width of the profile elements of the tread surface of the tread portion. Additionally, "RSm" may be measured according to JIS B 0601 (2001).

In addition, it is preferable that the tire of the present invention has a surface roughness at which Ra is 1$\mu$m or more and 50$\mu$m or less, on at least a part of the tread surface of the tread portion.

In this way, it is possible to further suppress the degradation of block rigidity and drainage performance, and simultaneously further improve the on-ice performance and on-snow performance of tires. Additionally, by setting the surface roughness of the tread surface of the tread portion to have an Ra of 1$\mu$m or more and 50$\mu$m or less, it is possible to further suppress the degradation of the block rigidity and the drainage performance, and simultaneously further improve the on-ice performance and on-snow performance of the tire sufficiently. Namely, for the surface properties of the tread surface of the tread portion, Ra is a 1$\mu$m or more, and consequently it is possible to ensure water-removing paths. On the other hand, since Ra is 50$\mu$m or less, it is possible to maintain the block rigidity even under large load. Further, it is preferable that the part with micro protrusions 9 formed thereon has surface properties with a surface roughness at which Ra is 10$\mu$m or more and 40$\mu$m or less.

Here, "Ra" refers to the arithmetic mean roughness (JIS B 0601 (2001)) of the tread surface of the tread portion.

Here, the ten-point average roughness Rz of the tread surface of the tread portion of the tire with protrusions with a hemispherical shape formed thereon is 1.0 to 50$\mu$m.

The reason is that by setting Rz to be 1.0$\mu$m or more, the gaps for water removing may be ensured, while by setting Rz to be 50$\mu$m or less, the contacting area with the road surface may be ensured, and thereby it is possible to further improve the on-ice performance and on-snow performance of the tire.

Here, "ten-point average roughness Rz" refers to a value measured in accordance with the provisions of JIS B 0601 (1994), based on the reference length of 0.8mm and the evaluation length of 4mm.

In addition, it is preferable that the mean spacing S of local peaks of the protrusions 9 formed on the tread surface of the tread portion of the tire is set to be 5.0 to 100 $\mu$m.

The reason is that by setting spacing S to be 5.0$\mu$m or more, the gaps for water removing may be ensured, while by setting spacing S to be 100$\mu$m or less, the contacting area with the road surface may be ensured, and thereby it is possible to further improve the on-ice performance and on-snow performance of the tire.

As used herein, the term "mean spacing of local peaks" refers to a value measured in accordance with the provisions of JIS B 0601 (1994), based on the reference length of 0.8mm and the evaluation length of 4mm.

Additionally, the aforementioned tire is not particularly limited and may be manufactured with the tire forming mold as follows. Further, the forming of the tire utilizing the tire forming mold as follows may be performed with ordinary methods.

<Tire forming mold>

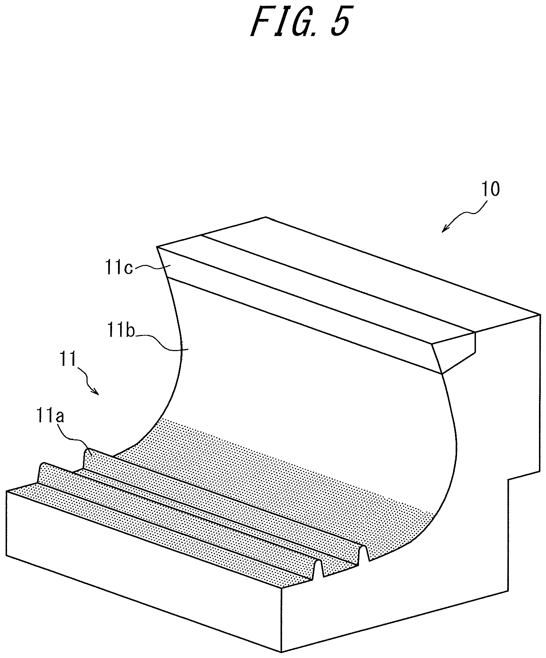

FIG. 5 is a schematic partial perspective view showing a part of the tire forming mold utilized in forming the tire of the present invention.

As is shown in FIG. 5, the mold 10 has a molding surface 11 for the vulcanization forming of the tire.

The molding surface 11 has a tread-surface molding surface 11a for molding the tread surface of the tread portion, and according to the example as shown, it also has a sidewall-portion molding surface 11b for molding the outside surface of a sidewall portion, and a bead-portion molding surface 11c for molding the outside surface of the bead portion.

The molding surface 11 is not particularly limited, and may be formed with aluminum, for example.

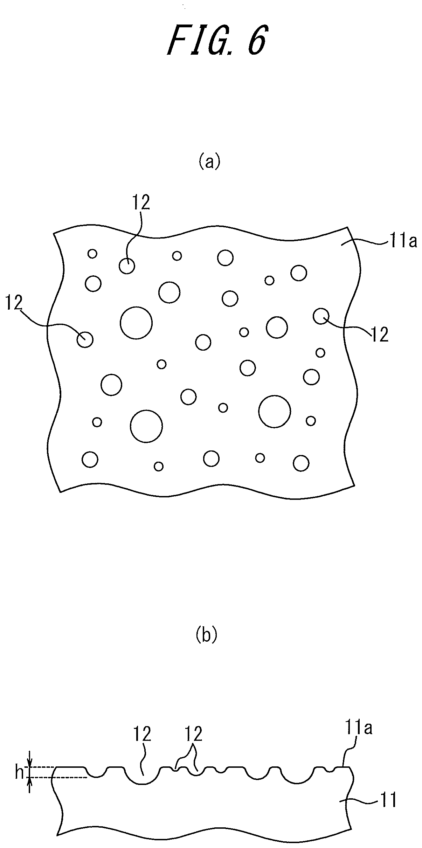

The tread surface of the tread portion of the tread portion of the tire of the present invention having the aforementioned surface properties may be formed with the tire vulcanization mold 10 comprising the tread-surface molding surface 11a having the aforementioned surface properties. Specifically, as shown in the enlarged plan view of the tread-surface molding surface 11a in FIG. 6(a) and in the enlarged cross-sectional view taken along the width direction of the mold 10 on the tread-surface molding surface 11a side in FIG. 6(b), the tire-forming mold 10 according to the present embodiment has a surface roughness at which the kurtosis of the assessed profile Rku is 2 or less on the entire tread surface molding surface 11a for molding the tread surface of the tread portion of the tire. Note that although FIG. 6 illustrates that recesses 12 are recesses with a hemispherical shape. Reference recesses 12 may also be recesses of truncated hemispherical shape, truncated conical shape, truncated pyramidal shape, cylindrical shape or prismatic shape.

Namely, in the tire vulcanization process utilizing the mold 10, the surface shape of the tread-surface molding surface 11a of mold 10 is transferred as the surface shape of the tread surface of the tread portion of the tire. Additionally, the tread surface of the tread portion of the manufactured tire has a surface roughness at which the kurtosis of the assessed profile Rku is 2 or less. Therefore, it is possible to form a tire excellent in on-ice performance and on-snow performance.

The method for molding the tread-surface molding surface 11a of mold 10 will be explained hereinafter.

The aforementioned tread-surface molding surface 11a may be formed via a blast material blasting process whereby blast materials of a particular shape are blasted and forced to impact the molding surface. Additionally, the tire forming mold obtained via the blast material blasting process has a surface roughness at which the kurtosis of the assessed profile Rku is 2 or less on the tread-surface molding surface, as above, and consequently the tread surface of the tread portion of the vulcanization formed tire utilizing the mold has a surface roughness at which the kurtosis of the assessed profile Rku is 2 or less.

Here, in the blast material blasting process, it is preferable that the aforementioned tread-surface molding surface 11a (entirely or partially) is formed by blasting spherical blast materials with a sphericity of 15μm or less and forcing the same to impact the tread-surface molding surface.

This is because that by setting the sphericity of the blast materials to be 15μm or less, recesses with desirable properties may be formed on the tread-surface molding surface of the mold, and it is possible to shape the tread surface of the tread portion of the tire formed by utilizing the mold into a desirable surface shape.

Further, it is more preferable that the sphericity of the blast materials herein is set to be 10μm or less.

This is because that a large number of recesses with desirable properties may be easily formed on the tread-surface molding surface of the mold by setting the sphericity of the blast materials to be 10μm or less, and consequently, it is possible to form tires with further improved on-ice performance and on-snow performance by forming a large number of protrusions with a desirable shape on the tread surface of the tread portion of the tire formed by utilizing the mold.

In addition, it is more preferable that the sphericity of the blast materials herein is set to be 5μm or less.

This is because that in this way, recesses with desirable properties may be more easily formed on the tread-surface molding surface of the mold.

Here, it is preferable that the average particle size of the blast materials utilized in the blast material blasting process is set to be 10μm to 1mm.

This is because that by setting the average particle size of the blast materials to be 10 μm or more, a mold having recesses of desirable shape on its tread-surface molding surface may be obtained easily, and in the blast material blasting process, it is possible to suppress the splashing around of the blast materials in the case of high-pressure blasting, while by setting the average particle size of the blast materials to be 1mm or less, it is possible to suppress the rapid wearing of the mold surface.

For the same reason, it is more preferable that the average particle size of the blast materials is set to be 20μm to 0.7mm, still more preferably 30μm to 0.5mm.

As used herein, the term "average particle size" refers to the value obtained by imaging blasting materials with SEM, then randomly taking out 10 blasting materials therefrom, obtaining the average value of the diameter of the inscribed circle and the diameter of the circumscribed circle of each blast material, and averaging the results of the 10 blast materials.

In addition, it is preferable that the Mohs hardness of the blast materials is set to be 2 to 10.

This is because that by setting the Mohs hardness of the blast materials to be 2 or more, a mold having recesses of desirable shape on its tread-surface molding surface may be obtained more easily. On the other hand, by setting the Mohs hardness of the blast materials to be 10 or less, the mold may be less prone to rapid deterioration.

For the same reason, it is more preferable that the Mohs hardness of the blast materials is set to be 3.0 to 9.0, still more preferably 5.0 to 9.0.

In addition, it is preferable that the Mohs hardness of the tread-surface molding surface of the tire forming mold is set to be 2.0 to 5.0, and that the difference between the Mohs hardness of the tread-surface molding surface of the tire forming mold and the Mohs hardness of the blast materials is set to be 3.0 to 5.0.

Additionally, it is preferable that the specific gravity of the blast materials is set to be 0.5 to 20.

This is because that by setting the specific gravity of the blast materials to be 0.5 or more, the operability may be improved by suppressing the splashing around of the blast materials in the blasting process. On the other hand, by setting the specific gravity of the blast materials to be 20 or less, it is possible to reduce the energy needed for accelerating the blast materials, and to suppress the rapid wearing of the mold.

For the same reason, it is more preferable that the specific gravity of the blast materials is set to be 0.8 to 18, still more preferably 1.2 to 15.

Here, the material of the blast materials is not particularly limited, and it is preferable to utilize, for example, gyricon, iron, cast steel or ceramics.

In addition, in the blast material blasting process, it is preferable that the blast materials are blasted with high-pressure air of 100 to 1000kPa onto the tread-surface molding surface of the aforementioned mold for 30 seconds to 10 minutes.

This is because that by blasting the blast materials for 30 seconds or more under a pressure of 100kPa or more, it is possible to shape the tread-surface molding surface into the aforementioned desirable shape thoroughly, while by blasting the blast materials for 10 minutes or less under a pressure of 1000kPa or more, it is possible to suppress the damage to the tread-surface molding surface.

Further, it is preferable that the blasting speed of the blast materials is set to be 0.3 to 10(m/s), more preferably 0.5 to 7(m/s), by adjusting the specific gravity and blasting pressure of the materials.

In this case, it is preferable that the distance between the nozzle for blasting the blast materials and the tire forming mold is set to be 50 to 200(mm). Here, the aforementioned blasting time of the blast materials refers to the blasting time for a single mold, for example, in the case that a single tire is formed utilizing 9 molds, it is preferable that blast materials are blasted for 270 seconds to 90 minutes in total onto the tread-surface molding surface of the 9 molds for forming a single tire.

In addition, the blasting of the blast materials onto the tread-surface molding surface of a single mold may be performed by the operator displacing the blasting position while considering the shape of the mold, etc. In this way, it is possible to blast the blast materials more uniformly.

Here, for the mold 10, it is preferable that the tread-surface molding surface has surface properties having a surface roughness at which the kurtosis of the assessed profile Rku is 1.5 or less. This is because that it is possible to mold a tread surface of the tread portion of the formed tire with surface properties having a surface roughness at which the kurtosis of the assessed profile Rku is 1.5 or less, and it is possible to form a tire exhibiting even better on-ice performance and on-snow performance. Further, it is possible to control the kurtosis of the assessed profile Rku of the tread-surface molding surface of the mold by adjusting the particle size, the speed and the particle number when blasting. Specifically, if the speeder is increased, the kurtosis Rku may be reduced.

In addition, in the mold 10, the shape of each recess 12 is hemispherical. This is because that by shaping each recess 12 into a hemispherical shape, it is possible to form protrusions 9 of hemispherical shape on the tread surface of the tread portion of the tire. Further, it is possible to control the shape of recesses 12 by adjusting the particle size, the blasting speed and the blasting angle of the blast materials.

Further, in the mold 10, it is preferable that the depth h of each recess 12 is set to be 1 to $50\mu$m. This is because that by setting the depth h of each ruptured-bubble-like recess 12 to be 1 to $50\mu$m, it is possible to form solid-bubble-like protrusions 9 with a height of 1 to $50\mu$m on the tread surface of the tread portion of the tire. Further, it is possible to control the depth h of each ruptured-bubble-like recess 12 by adjusting the blasting speed of the blast materials. Specifically, if the blasting speed of the blast materials is increased, the depth h may be increased.

Here, the depth of each recess 12 refers to the distance along the radial direction between a third imaginary plane perpendicular to a radial direction line extending across the deepest portions (the inner ends in the radial direction) of the recesses 12 and a fourth imaginary plane closest to the third imaginary plane among the imaginary planes contacting the outer contour line of the recesses 12 and perpendicular to the radial direction line. Note that the term "radial direction" refers to a direction corresponding to the radial direction of the toroidal tread-surface molding surface, namely a direction corresponding to the tire radial direction of the tire formed by utilizing the mold 10.

Further, the depth of recesses 12 may be measured with an SEM or a microscope.

In addition, the tire forming mold of the present invention is a tire forming mold, having a tread-surface molding surface for molding the tread surface of the tread portion of the tire, and it is preferable that at least a part of the tread-surface molding surface has a surface roughness satisfying the following condition:

$$Rsk>0$$

This is because that in this way, it is possible to form the aforementioned tire excellent in on-ice performance and on-snow performance, and at which at least a part of the tread surface of the tread portion has a surface roughness satisfying the condition that Rsk<0.

Here, it is more preferable that the tread-surface molding surface of the mold has a surface properties satisfying the condition that Rsk>-0.1. This is because that it is possible to mold a tread surface of the tread portion of the formed tire with surface properties satisfying the condition that Rsk<-0.1, and it is possible to form a tire excellent in on-ice performance and on-snow performance.

It is possible to control the Rsk of the tread-surface molding surface by adjusting the blasting time of the blast materials. Specifically, if the blasting time of the blast materials is increased, the Rsk may be reduced.

Here, the tire forming mold of the present invention is a mold for tire forming, having a tread-surface molding surface for molding the tread surface of the tread portion of the tire, and at least a part of the tread-surface molding surface has surface properties satisfying the following relational expression:

$$50\mu m \leq RSm \leq 250\mu m$$

This is because that in this way, by setting Rsm to be 50 to $250\mu$m on at least a part of the tread-surface molding surface, it is possible to form a tire excellent in on-ice performance and on-snow performance, and having surface properties at which the RSm is 50 to $250\mu$m.

Further, it is preferable that the mold of the present invention satisfies the relational expression above in the range of 90% or more of the area of the tread-surface molding surface. This is because that by setting the Rsm to be 50 to $250\mu$m

in the range of 90% or more of the area of the tread-surface molding surface, it is possible to obtain surface properties in a predetermined range of 90% or more of the tread surface of the tread portion of the tire. Here, in the mold, it is preferable that the RSm of the tread-surface molding surface is 60 to 150$\mu$m. This is because that by setting the Rsm of the tread-surface molding surface to be 60 to 150$\mu$m, it is possible to set the Rsm of the tread surface of the tread portion of the tire to be 60 to 150$\mu$m. Further, it is possible to control the Rsm of the tread-surface molding surface by adjusting the particle size of the blast materials. Specifically, if the particle size of the blast mterials is increased, the Rsm may be increased.

Here, in the present invention, "RSm" refers to the mean width of the profile elements of the tread-surface molding surface, as mentioned above. Additionally, "RSm" may be measured according to JIS B 0601 (2001), as mentioned above.

Further, the tire forming mold of the present invention is a mold for tire forming, having a tread-surface molding surface for molding a tread surface of the tread portion, and it is preferable that at least a part of the tread-surface molding surface has a surface roughness at which the Ra is 1$\mu$m or more and 50$\mu$m or less.

This is because that in this way, it is possible to form the aforementioned tire excellent in on-ice performance and on-snow performance, and at which at least a part of the tread surface of the tread portion has a surface roughness at which the Ra is 1$\mu$m or more and 50$\mu$m or less.

Here, it is more preferable that the tread-surface molding surface of the mold has surface properties having a surface roughness at which the Ra is 10$\mu$m or more and 40$\mu$m or less. This is because that it is possible to mold a tread surface of the tread portion of the formed tire with surface properties such that the Ra is 10$\mu$m or more and 40$\mu$m or less, and it is possible to form a tire excellent in on-ice performance and on-snow performance.

It is possible to control the Ra of the tread-surface molding surface by adjusting the blasting speed of the blast materials. Specifically, if the blasting speed is increased, the Ra may be increased.

Here, the ten-point average roughness Rz of the tread-surface molding surface of the mold is 1.0 to 50$\mu$m. This is because that it is possible to form a tire with a tread surface of the tread portion having a ten-point average roughness Rz of 1.0 to 50$\mu$m.

Further, by setting the average particle size of the blast materials used in the blast material blasting process to be 50 to 400$\mu$m, it is possible to obtain a tire-forming mold provided with a tread-surface molding surface having a ten-point average roughness Rz in the aforementioned range.

In addition, it is preferable that the recesses of the tread-surface molding surface of the mold have a mean spacing of local peaks of 5.0 to 100$\mu$m. This is because that it is possible to form a tire with the protrusions formed on the tread surface of the tread portion having a mean spacing S of local peaks of 5.0 to 100$\mu$m.

Further, by setting the average particle size of the blast materials utilized in the blast material blasting process to be 50 to 400$\mu$m, it is possible to obtain a tire forming mold including a tread-surface molding surface having an mean spacing S in the aforementioned range.

EXAMPLES

The present invention will be explained in further detail below according to examples, although the present invention is not limited to the disclosed examples.

(Manufacture of tire forming mold)

Tire forming molds 1 to 4 having tread-surface molding surfaces with surface properties as shown in Table 1 were manufactured by blasting (ceramic-based) blast materials to the tread-surface molding surfaces of tire forming molds made from aluminum, while changing the blasting conditions (such as blasting pressure and blasting speed). Further, the surface properties of the tread surfaces of the manufactured molds were measured with an SEM and a microscope.

Table 1

| | Mold 1 | Mold 2 | Mold 3 | Mold 4 |
|---|---|---|---|---|
| | Conventional example | Comparative example | Example | Example |
| Presence/absence of recesses | Absence | Presence | Presence | Presence |
| Recess shape | - | Sharp (pointed) | Hemisphere | Hemisphere |
| Rsk [-] | - | Less than 0 | More than 0.1 | More than 0.1 |
| Rku [-] | - | More than 2 | 2 or less | 2 or less |

(continued)

|  | Mold 1 | Mold 2 | Mold 3 | Mold 4 |
|---|---|---|---|---|
|  | Conventional example | Comparative example | Example | Example |
| RSm [μm] | - | 70 | 70 | 50 |
| Ra [μm] | - | 20 | 20 | 50 |

(Manufacture of tire)

Tires 1 to 4 of tire size 205/55R16 were manufactured according to ordinary methods, by utilizing the manufactured tire forming molds 1 to 4, respectively. Additionally, the surface properties of the tread surfaces of the tread portion of the manufactured tires were measured by utilizing an SEM and a microscope. The results are as shown in Table 2.

In addition, the on-ice performance and on-snow performance of each manufactured tire were evaluated with the evaluation method as follows. The results are as shown in Table 2.

<On-ice performance>

As soon as each tire was manufactured, the tire was mounted on an approved rim, filled with a normal internal pressure specified by JATMA and installed onto a vehicle. Then, the on-ice friction coefficient was measured under the conditions of 4.3KN load on each front wheel and a speed of 30km/h on icy road. The on-ice friction coefficient of each tire was evaluated, with a score of 100 representing the on-ice friction coefficient of tire 1. The results are as shown in Table 2. The larger the value, the higher the on-ice friction coefficient is and the more excellent the on-ice performance is, as is shown in Table 2.

<On-snow performance>

As soon as each tire was manufactured, the tire was mounted on an approved rim, filled with a normal internal pressure specified by JATMA and installed onto a vehicle. Additionally, the on-snow friction coefficient was measured under the conditions of 4.3KN load on each front wheel and a speed of 30km/h on snowy road. The on-snow friction coefficient of each tire was evaluated, with a score of 100 representing the on-snow friction coefficient of tire 1. The results are as shown in Table 2. The larger the value, the higher the on-snow friction coefficient is and the more excellent the on-snow performance is, as is shown in Table 2.

Table 2

|  | Tire 1 | Tire 2 | Tire 3 | Tire 4 |
|---|---|---|---|---|
|  | Conventional example | Comparative example | Example | Example |
| Presence/absence of protrusions | Absence | Presence | Presence | Presence |
| Protrusion shape | - | Sharp (pointed) | Hemisphere | Hemisphere |
| Rsk [-] | - | More than 0 | Less than -0.1 | Less than -0.1 |
| Rku [-] | - | More than 2 | 2 or less | 2 or less |
| RSm [μm] | - | 70 | 70 | 50 |
| Ra [μm] | - | 20 | 20 | 50 |
| On-ice performance | 100 | 102 | 115 | 110 |
| On-snow performance | 100 | 101 | 112 | 108 |

It can be understood that comparing to tires according to the comparative example and the conventional example, the tire according to the examples of the present invention is more excellent in on-ice performance and on-snow performance, as is shown in Table 2.

INDUSTRIAL APPLICABILITY

According to the present invention, it is possible to provide a tire with improved on-ice performance and on-snow performance and also a tire forming mold that can be used for forming the same.

REFERENCE SIGNS LIST

| | |
|---|---|
| 1 | tread portion |
| 2 | protrusion |
| 3 | gap |
| 4 | bead portion |
| 4a | bead core |
| 5 | sidewall portion |
| 6 | tread portion |
| 7 | carcass |
| 8 | belt |
| 8a, 8b | belt layer |
| 9 | protrusion |
| 10 | mold |
| 11 | molding surface |
| 11a | tread-surface molding surface |
| 11b | sidewall-portion molding surface |
| 11c | bead-portion molding surface |
| 12 | recess |
| 20 | tire |
| T | road surface |

**Claims**

1. A tire (20) comprising a tread portion (6) having a tread surface (6a), wherein at least a part of the tread surface (6a) of the tread portion (6) has a surface roughness at which the kurtosis of the assessed profile Rku is 2 or less, wherein hemispherical protrusions (9) are formed on at least the part of the tread surface (6a),
the mean width of the profile elements of the tread surface of the tread portion RSm is $50\mu m \leq RSm \leq 250\mu m$,
gaps are among the protrusions and the ten-point average roughness Rz of the tread surface of the tread portion of the tire with protrusions with a hemispherical shape formed thereon is 1.0 to $50\mu m$, wherein Rz is measured in accordance with the provisions of JIS B 0601 (1994), based on the reference length of 0.8mm and the evaluation length of 4mm,
RSm is measured according to JIS B 0601 (2001),
and Rku is measured by JIS B 0601 (2001).

2. The tire according to claim 1, wherein the height H of the protrusions formed on the tread surface of the tread portion is 1 to $50\mu m$.

3. The tire according to claim 1, wherein at least the part of the tread surface of the tread portion has a surface roughness satisfying the following condition that Rsk<0 and Rsk refers to the skewness of the assessed profile measured according to JIS B 0601 (2001).

4. The tire according to claim 1, wherein at least the part of the tread surface of the tread portion has a surface roughness at which Ra is $1\mu m$ or more and $50\mu m$ or less, Ra is the arithmetic mean roughness measured according to JIS B 0601 (2001).

5. A tire forming mold (10) comprising a tread-surface molding surface (11a) for molding the tread surface (6a) of the tread portion (6) of the tire (20), wherein at least a part of the tread-surface molding surface (11a) has a surface roughness at which the kurtosis of the assessed profile Rku is 2 or less, wherein recesses (12) with a hemispherical shape are formed on at least the part of the tread-surface molding surface (11a),

the mean width of the profile elements of the tread-surface molding surface RSm is $50\mu m \leq RSm \leq 250\mu m$, gaps are among the recesses, and

the ten-point average roughness Rz of the tread-surface molding surface of the mold is 1.0 to $50\mu m$, wherein Rz is measured in accordance with the provisions of JIS B 0601 (1994), based on the reference length of 0.8mm and the evaluation length of 4mm,

RSm is measured according to JIS B 0601 (2001),

and Rku is measured by JIS B 0601 (2001).

6. The tire forming mold according to claim 5, wherein the depth h of each recess 12 is set to be 1 to $50\mu m$.

7. The tire forming mold according to claim 5, wherein at least the part of the tread-surface molding surface has a surface roughness satisfying the following condition:

   Rsk>0 and Rsk refers to the skewness of the assessed profile measured according to JIS B 0601 (2001).

8. The tire forming mold according to claim 5, wherein at least the part of the tread-surface molding surface has a surface roughness at which the Ra is 1 $\mu m$ or more and $50\mu m$ or less, Ra is the arithmetic mean roughness measured according to JIS B 0601 (2001).

## Patentansprüche

1. Reifen (20), der einen Laufflächenabschnitt (6) umfasst, der eine Profilfläche (6a) hat, wobei wenigstens ein Teil der Profilfläche (6a) des Laufflächenabschnitts (6) eine Oberflächenrauheit hat, bei der die Wölbung des geprüften Profils Rku 2 oder weniger beträgt,

   wobei halbkugelförmige Vorsprünge (9) auf wenigstens dem Teil der Profilfläche (6a) geformt sind,

   die mittlere Breite der Profilelemente der Profilfläche des Laufflächenabschnitts RSm 50 $\mu m \leq RSm \leq 250$ $\mu m$ beträgt,

   Lücken zwischen den Vorsprüngen sind und

   die durchschnittliche Zehnpunktrauheit Rz der Profilfläche des Laufflächenabschnitts des Reifens mit darauf geformten Vorsprüngen mit einer habkugelförmigen Gestalt 1,0 bis 50 $\mu m$ beträgt, wobei Rz entsprechend den Vorschriften von JIS B 0601 (1994) gemessen wird, auf der Grundlage der Referenzlänge von 0,8 mm und der Bewertungslänge von 4 mm,

   RSm entsprechend JIS B 0601 (2001) gemessen wird

   und Rku durch JIS B 0601 (2001) gemessen wird.

2. Reifen nach Anspruch 1, wobei

   die Höhe H der auf der Profilfläche des Laufflächenabschnitts geformten Vorsprünge 1 bis 50 $\mu m$ beträgt.

3. Reifen nach Anspruch 1, wobei

   wenigstens der Teil der Profilfläche des Laufflächenabschnitts eine Oberflächenrauheit hat, welche die folgende Bedingung erfüllt, dass Rsk < 0 ist und Rsk die Schiefe des geprüften Profils, gemessen entsprechend JIS B 0601 (2001), bezeichnet.

4. Reifen nach Anspruch 1, wobei

   wenigstens der Teil der Profilfläche des Laufflächenabschnitts eine Oberflächenrauheit hat, bei der Ra 1 $\mu m$ oder mehr und 50 $\mu m$ oder weniger beträgt, wobei Ra die arithmetisch gemittelte Rauheit, gemessen entsprechend JIS B 0601 (2001), ist.

5. Reifenherstellungsform (10), die eine Laufflächen-Formfläche (11a) zum Formen der Profilfläche (6a) des Laufflächenabschnitts (6) des Reifens (20) hat, wobei wenigstens ein Teil der Laufflächen-Formfläche (11a) eine Oberflächenrauheit hat, bei der die Wölbung des geprüften Profils Rku 2 oder weniger beträgt,

   wobei Aussparungen (12) mit einer halbkugelförmigen Gestalt auf wenigstens dem Teil der Laufflächen-Formfläche (11a) geformt sind,

   die mittlere Breite der Profilelemente der Laufflächen-Formfläche RSm 50 $\mu m \leq RSm \leq 250$ $\mu m$ beträgt,

   Lücken zwischen den Aussparungen sind und

   die durchschnittliche Zehnpunktrauheit Rz der Laufflächen-Formfläche der Form 1,0 bis 50 $\mu m$ beträgt, wobei Rz entsprechend den Vorschriften von JIS B 0601 (1994) gemessen wird, auf der Grundlage der Referenzlänge von 0,8 mm und der Bewertungslänge von 4 mm,

RSm entsprechend JIS B 0601 (2001) gemessen wird
und Rku durch JIS B 0601 (2001) gemessen wird.

6. Reifenherstellungsform nach Anspruch 5, wobei
die Tiefe jeder Aussparung auf 1 μm bis 50 μm festgesetzt ist.

7. Reifenherstellungsform nach Anspruch 5, wobei
wenigstens der Teil der Laufflächen-Formfläche eine Oberflächenrauheit hat, welche die folgende Bedingung erfüllt:

Rsk > 0 ist und Rsk die Schiefe des geprüften Profils, gemessen entsprechend JIS B 0601 (2001), bezeichnet.

8. Reifenherstellungsform nach Anspruch 5, wobei
wenigstens der Teil der Laufflächen-Formfläche eine Oberflächenrauheit hat, bei der Ra 1 μm oder mehr und 50 μm oder weniger beträgt, wobei Ra die arithmetisch gemittelte Rauheit, gemessen entsprechend JIS B 0601 (2001), ist.

## Revendications

1. Pneumatique (20) comprenant une partie de bande de roulement (6) comportant une surface de bande de roulement (6a), dans lequel au moins une partie de la surface de bande de roulement (6a) de la partie de bande de roulement (6) a une rugosité de surface dont le facteur d'aplatissement Rku du profil évalué est de 2 ou moins, dans lequel des saillies hémisphériques (9) sont formées sur au moins la partie de la surface de bande de roulement (6a), la largeur moyenne RSm des éléments du profil de la surface de bande de roulement de la partie de bande de roulement est 50 μm ≤ RSm ≤ 250 μm, des espacements sont présents entre les saillies, et la rugosité moyenne sur dix points Rz de la surface de roulement de la partie de bande de roulement du pneumatique comportant des saillies hémisphériques formées sur celle-ci est de 1,0 à 50 μm, Rz étant mesurée selon les prescriptions de la norme JIS B 0601 (1994), sur la base d'une longueur de référence de 0,8 mm et d'une longueur d'évaluation de 4 mm, RSm étant mesurée selon la norme JIS B 0601 (2001), et Rku étant mesuré selon la norme JIS B 0601 (2001).

2. Pneumatique selon la revendication 1, dans lequel la hauteur H des saillies formées sur la surface de bande de roulement de la partie de bande de roulement est de 1 à 50 μm.

3. Pneumatique selon la revendication 1, dans lequel au moins la partie de la surface de bande de roulement de la partie de bande de roulement a une rugosité de surface satisfaisant à la condition suivante : Rsk < 0, Rsk se référant au coefficient d'asymétrie du profil évalué mesuré selon la norme JIS B 0601 (2001).

4. Pneumatique selon la revendication 1, dans lequel au moins la partie de la surface de bande de roulement de la partie de bande de roulement a une rugosité de surface selon laquelle Ra est égal ou supérieur à 1 μm et égal ou inférieur à 50 μm, Ra étant la rugosité moyenne arithmétique mesurée selon la norme JIS B 0601 (2001).

5. Moule de formage de pneumatique (10) comprenant une surface de moulage de surface de bande de roulement (11a) pour mouler la surface de bande de roulement (6a) de la partie de bande de roulement (6) du pneumatique (20), dans lequel au moins une partie de la surface de moulage (11a) de surface de bande de roulement a une rugosité de surface dont le coefficient d'aplatissement Rku du profil évalué est de 2 ou moins, dans lequel des renfoncements (12) ayant une forme hémisphérique sont formés sur au moins la partie de la surface de moulage (1 la) de la surface de bande de roulement, la largeur moyenne RSm des éléments du profil de la surface de moulage de la surface de bande de roulement est 50 μm ≤ RSm ≤ 250 μm, des espacements sont présents entre les renfoncements, et la rugosité moyenne sur dix points Rz de la surface de moulage de surface de roulement du moule est de 1,0 à 50 μm, Rz étant mesurée selon les prescriptions de la norme JIS B 0601 (1994), sur la base d'une longueur de référence de 0,8 mm et d'une longueur d'évaluation de 4 mm, RSm étant mesurée selon la norme JIS B 0601 (2001), et Rku étant mesuré par la norme JIS B 0601 (2001).

13

**6.** Moule de formage de pneumatique selon la revendication 5, dans lequel la profondeur de chaque renfoncement (12) est réglée pour être de 1 à 50 $\mu$m.

**7.** Moule de formage de pneumatique selon la revendication 5, dans lequel au moins la partie de la surface de moulage de la surface de bande de roulement a une rugosité de surface satisfaisant la condition suivante : Rsk > 0 , Rsk se référant au coefficient d'asymétrie du profil évalué mesuré selon la norme JIS B 0601 (2001).

**8.** Moule de formage de pneumatique selon la revendication 5, dans lequel au moins la partie de la surface de moulage de la surface de bande de roulement a une rugosité de surface selon laquelle Ra est égal ou supérieur à 1 $\mu$m et égal ou inférieur à 50 $\mu$m, Ra étant la rugosité moyenne arithmétique mesurée selon la norme JIS B 0601 (2001).

# FIG. 1

(a)

(b)

# FIG. 2

# FIG. 3

(a)

(b)

## FIG. 4

# FIG. 5

# FIG. 6

(a)

(b)

# FIG. 7

(a)

(b)

(c)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002192914 A
- JP H11301217 A
- JP 2009067378 A

- WO 2011118856 A
- DE 102004010060